(19) Europäisches Patentamt / European Patent Office / Office européen des brevets

(11) **EP 3 106 444 A1**

(12) **EUROPEAN PATENT APPLICATION**

(43) Date of publication:
21.12.2016 Bulletin 2016/51

(21) Application number: 15172193.3

(22) Date of filing: 15.06.2015

(51) Int Cl.:
*C04B 14/02* (2006.01)　　*C04B 14/04* (2006.01)
*C04B 14/06* (2006.01)　　*C04B 20/00* (2006.01)
*C04B 20/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ZaaK Technologies GmbH**
**08064 Zwickau (DE)**

(72) Inventor: **KHAN, Abbas**
**08064 Zwickau (DE)**

(74) Representative: **Müller & Schubert**
**Patentanwälte**
**Schlüterstrasse 37**
**10629 Berlin (DE)**

(54) **LIGHTWEIGHT FINE PARTICULATES**

(57)　The present invention relates to lightweight fine particulates, especially sintered synthetic sand, their use in different technical fields and building material compositions comprising the same.

Lightweight fine particulates, especially sintered synthetic sand, as disclosed herein are characterized in that the grading of the particulates is as follows:

| Sieve size (mm) | 2 | 1 | 0.5 | 0.25 |
|---|---|---|---|---|
| Passing (mass-%) | >98 | 55 to 80 | 30 to 45 | 2 to 4 |

Disclosed is further the use of lightweight fine particulates according to the invention as aggregate for construction purposes, especially in combination with fly ash.

Lightweight fine particulates according to the invention are further used as additive in paint or coating formulations, as foundry sand, additive for waste water treatment, substrate for horticultural purposes, for hydroponic gardening, for green roofing purposes or for applications in geotechnics.

Disclosed are also building material compositions in form of mortar or concrete, comprising the lightweight fine particulates according to the invention.

The lightweight fine particulates according to the invention, and especially the building material compositions derived from them, are advantageous in respect to superior quality and workability, sound insulation and sustainability from internal curing.

*Fig. 1*

**EP 3 106 444 A1**

**Description**

**Field of the Invention**

The present invention relates to lightweight fine particulates, especially sintered synthetic sand, their use in different technical fields and building material compositions comprising the same.

**Background of the Invention**

Indian Patent Application No. 3099/MUM/2011 discloses a method of producing sintered lightweight fine particulates like sintered sand from industrial wastes. The method of manufacturing lightweight fine particulates comprises the steps of:

1. Blending and mixing fly ash with natural additives.
2. Formation of granules using a high intensity shear-mixer.
3. Fine particulates of different sizes and shapes are produced.
4. Particulates are dried and classified using powerful vibrating screens.
5. Particulates of desired sizes and shapes are sintered at high temperature (900-1,400 °C).

The global demand for sand or fine particulates in the building and construction and other industries is applying increasing pressure on the dwindling natural sources of sand. The sources of fine particulates for this purpose are a) natural sand from nullahs, creeks and rivers and b) crushed stones or manufactured sand. However, these alternative sand sources are drastically changing the landscape, destroying natural habitats and endangering ecosystem. Furthermore, the destructive practice of sand extraction or mining are making it increasingly unsustainable raw material.

The problem to be solved is to provide lightweight fine particulates as a substitute for sand for building and construction purposes as well as other purposes.

**Summary of the Invention**

The problem is solved by providing lightweight fine particulates, especially sintered synthetic sand, characterized in that the grading of the particulates is as follows:

| Sieve size (mm) | 2 | 1 | 0.5 | 0.25 |
|---|---|---|---|---|
| Passing (mass-%) | >98 | 55 to 80 | 30 to 45 | 2 to 4 |

According to the invention lightweight fine particulates are preferred, wherein the passing mass for the 1 mm sieve size is in the range of 45 to 70 %.

According to the invention lightweight fine particulates are also preferred, wherein the passing mass for the 0.5 mm sieve size is in the range of 35 to 40 %.

Preferred are also lightweight fine particulates, wherein the bulk density is in the range of 600 to 1,200 kg/m$^3$.

Preferred are also lightweight fine particulates, wherein the water absorption is in the range of 6 to 15 % by weight.

A further object of the present invention is the use of lightweight fine particulates, according to the invention, as aggregate for construction purposes.

A use, according to the present invention is preferred, wherein the lightweight fine particulates are used in combination with fly ash.

A use, according to the present invention is also preferred, wherein the fly ash is derived from stone coal and/or brown coal.

A further object of the present invention is the use of lightweight fine particulates, according to the invention, as additive in paint or coating formulations.

A further object of the present invention is the use of lightweight fine particulates, according to the invention, as foundry sand.

A further object of the present invention is the use of lightweight fine particulates, according to the invention, as additive in waste water treatment

A further object of the present invention is the use of lightweight fine particulates, according to the invention, as substrate for horticultural purposes.

A further object of the present invention is the use of lightweight fine particulates, according to the invention, in hydroponic gardening.

A further object of the present invention is the use of lightweight fine particulates, according to the invention, in green roofing purposes.

A further object of the present invention is the use of lightweight fine particulates, according to the invention, in applications in geotechnics.

Another object of the invention is to provide a building material composition, comprising lightweight fine particulates, according to the present invention.

It is preferred according to the invention that additionally fly ash is comprised in the building material composition according to the invention.

Preferred is also a building material composition according to the invention, wherein the fly ash is derived from stone coal and/or brown coal.

Especially preferred is a building material composition, according to the invention, wherein the building material is a concrete composition.

It is further preferred that the density of the hardened concrete derived from the building material composition according to the invention is less than 2,100 kg/m$^3$

It is also preferred according to the invention that the thermal conductivity of the hardened concrete is less than 0.9 W/(m●K).

Especially preferred is a building material composition, according to the invention, wherein the building material is a mortar composition.

It is further preferred that the density of the hardened mortar is less than 1,800 kg/m$^3$

It is also preferred according to the invention that the thermal conductivity of the hardened mortar is less than 0.7 W/(m●K).

Preferred is also a building material composition, according to the invention in form of a mortar, wherein the ratio of compressive strength to the flexural strength of the hardened mortar is between 4 : 1 to 7 : 1.

Various other features and advantages will appear from the description to follow. In the description, reference is made to the accompanying drawings which form a part thereof, and in which are shown by way of illustration, various embodiments for practicing the invention. The embodiments will be described in sufficient detail to enable those skilled in the art to practice the invention, and it is to be understood that other embodiments may be utilized and that structural changes may be made without departing from the scope of the invention. The following detailed description is therefore not to be taken in a limiting sense, and the scope of the present invention is best defined by the appended claims.

**Brief Description of the Drawings**

The present invention is explained in more details by means of the accompanied drawings.

The Figures show:

Fig. 1: Particle grading of normal sand and ZaaKSand (DIN EN 933-1);
Fig. 2: Determination of the water demand for ZaaKSand mortar;
Fig. 3: Water demand of mortar mixes;
Fig. 4: Consistency of fresh mortar mixes;
Fig. 5: Density of fresh mortar mixes;
Fig. 6: Density of hardened concrete at the age of 28 days;
Fig. 7: Compressive strength and flexural strength of mortars; and
Fig. 8: Thermal conductivity of mortar mixes at the age of 28 days.

**Detailed Description of the Invention**

Definitions:

"ZaaKSand"

The lightweight fine particulates, especially sintered synthetic sand, according to the invention are referred herein, within the present description of the invention, to the expression "ZaaKSand". This means that the expression "ZaakSand" used herein refers to and describes the lightweight fine particulates according to the invention. The expression "ZaakSand" used herein refers to and describes also sintered synthetic sand according to the invention.

"Building material composition"

As used within the present description the term "building material composition" is any material or material composition which is used for construction purposes and wherein fine particulates like sands, are present. The "building material composition" contains i. a. aggregates, binders, fillers, sand, cement, gravel, chips, grit, and other materials suitable for construction purposes. Water may be also part of a "building material composition" in the sense of the present description.

"Aggregate for construction purposes"

As used within the present description the term "aggregate for construction purposes" or "aggregate" is any material that resists compressive stress and provides bulk to the building material composition. "Aggregates" may be, in the context of the present description, selected from sand, synthetic sand, lightweight fine particulates, ash, fly ash, gravel, grit and the like. An "aggregate" may also be "ZaakSand" as described in the context of the present description.

"Mortar"

As used within the present description the term "mortar" refers to a workable paste, comprising at least sand, binder and water, to bind building blocks and to fill and cover gaps in between the blocks, and to create surfaces on walls, ceilings and floors. For different uses, a wide range of sands and binders are used. The term "mortar", as used in the present description, will also include all types of aggregates, like sand and/or binders, that are suitable to fulfil the demands of mortar, wherein the aggregates may be also selected from lightweight fine particulates, synthetic sand, fly ash, ash, and the like. The term "mortar", as used within the present description, refers also to all uses of "mortar", like plastering, rendering or for masonry purposes.

"Concrete"

As used within the present description the term "concrete" refers to a composite material consisting at least out of water, "aggregate" and cement. Especially in respect to "aggregates" used, no limitation is given in respect to the present description. All kinds of "aggregate for construction purposes" as defined above may be used to form concrete as it is to be understood in the context of the present invention.

"Fly ash"

As used within the present description the term "fly ash" or "ash" refers to ash produced during combustion of coal. The term "fly ash" or "ash" is not restricted to the type of coal used in combustion. Any type of coal may be used, for example lignite coal, brown coal, soft coal, sub-bituminous coal, stone coal, anthracite, hard coal, bituminous coal, black coal, mineral coal, and the like.

It was surprisingly found that lightweight fine particulates, especially sintered synthetic sand, provide advantageous properties when used in different applications or for different purposes. The lightweight fine particulates according to the invention are characterized by means of a grading that is expressed by the results of sieve analyses. It has been surprisingly found that the following grading, namely

| Sieve size (mm) | 2 | 1 | 0.5 | 0.25 |
|---|---|---|---|---|
| Passing (mass-%) | >98 | 55 to 80 | 30 to 45 | 2 to 4 |

provides advantageous properties. The grading, or in other words, the distribution of particle sizes, provides to building material compositions, especially mortar and concrete compositions, that show better properties than those compositions that comprise normal sand instead of the lightweight fine particulates according to the invention. These properties are, for example, density, compressive strength, flexural strength and thermal conductivity. These advantageous properties are explained and described below in the accompanied examples and figures.

A person skilled in the art will find that the lightweight fine particulates according to the invention can easily be used as aggregate for building material compositions. The common aggregate in building material compositions is sand or gravel in different gradings. Especially sand with a maximum particle size of 2 mm can easily be substituted by the lightweight fine particulates according to the invention. This substitution of normal sand with lightweight fine particulates according to the invention may be performed partially in order to adjust the properties of the resulting building material compositions (mortar or concrete) to the demands of the building or the construction to be established.

The lightweight particles according to the invention, herein called "ZaaKSand", present a great variety of advantageous properties.

### Lightweight

ZaaKSand is up to 50 % lighter than normal sand benefiting improved structural efficiency, vertical urbanisation, reduced seismic forces impacts, and lower transportation costs.

Replacing natural sand with ZaaKSand leads to reduction in the dead-load of the concrete structure, which will allow structural engineers or designers to reduce the size of columns, footing and other load bearing elements. Concrete made from ZaaKSand can be up to 17 % lighter than ordinary concrete resulting in saving energy intensive steel reinforcement and cement.

### Superior quality & workability

Natural sand and manufactured sand are known for their irregular shapes, uneven gradation and impurities. The blending of these sands has been limited as it reduces the workability while finishing becomes a problem. Natural sand often contains impurities such as carbon, bones, shells, mica and silt which make it inferior for the use in cement mortar and concrete. The decay of these materials, due to weathering effects, shortens the life of the mortar and concrete.

ZaaKSand is regular in shape, size and even gradation, and in combination with being lightweighted offers excellent workability in fresh mortars and concrete. ZaaKSand is the world's purest construction sand material as it has zero organic impurities and negligible silt content.

### Sound insulation

With its micro-porous structure ZaaKSand can absorb noise resulting in acoustic comfort from increased sound insulation of concrete, blocks, plaster, renders and walls made of ZaaKSand.

### High performance concrete

ZaaKSand can provide stiffness similar to the stiffness of cement paste matrix resulting in fewer micro-cracks compared to normal density aggregates. The uniform stress distribution provides enhanced durability in demanding environments and less permeability of the concrete as compared to normal weight concrete. These characteristics combined with uniform distribution, low silt content (<0.2 %) and low MBV (<1.0 mg/g) proof that ZaaKSand can be used to make high performance concrete with significant advantage.

### Lower Transportation Cost - Lightweight

Transportation cost is directly related to weight. ZaaKSand or lightweight aggregates used in precast, ready-mix concrete and masonry demonstrate an economic and environmental advantage.

A study showed that the transportation cost savings are up to seven times greater than the additional cost of lightweight aggregate used to reduce the concrete density. Additionally, fewer trucks in congested cities are not only an environmental necessity but will also generate fewer public complaints.

### Sustainability of the work force - Ergonomics

According to the Center for Infrastructure Research, University of Nebraska at Lincoln, often masons retire before the expected retirement due to crippling back and shoulder injuries from the heavy lifting. The result is not only the loss of skilled labour, but also an increase in health costs.

Lightweight concrete, panels and blocks reduce the physical demands on labour and equipment, resulting in fewer injuries and worker's compensation claims, as well as extending equipment life.

### Internal Curing

Typically, replacing normal coarser aggregates with LWA provides significant reduction in settlement and plastic shrinkage, cracking of mortars and concretes. This is due to the phenomenon called, *internal curing, defined as* "supplying water throughout a freshly placed cementitious mixture using reservoirs, via pre-wetted lightweight aggregates, that readily release water as needed for hydration or to replace moisture lost through evaporation or self-desiccation".

Buildings made from LWA have shown excellent durability. The amazing Pantheon Dome, Rome, Italy, was built in 125 AD and is still standing today as testament to the durability of lightweight concrete material. The Pantheon Dome is made from natural lightweight aggregate, pumice.

*Sustainability from internal curing*

Internal curing may have been originally developed to reduce autogenous shrinkage and mitigate early-age cracking in high performance concretes, it has now become a strong potential to contribute to a more sustainable infrastructure in a variety of ways. Internal curing not only contributes to a more efficient hydration of the cement in a concrete mixture, but also increases service life of concrete structures. This results in small but significant reductions in cement content and steel content in many concrete mixtures, thereby significantly reducing the carbon footprint of each cubic meter of concrete used throughout the world.

According to the invention it is proposed to use ZaaKSand in different applications in different technical fields.

Using ZaaKSand in green roofing and horticulture will reduce dead load of the roof. It is non-toxic, odourless, inert, does not degrade, decompose, or react with agricultural or horticultural chemicals.

ZaaKSand will resist compaction, improves aeration and can be incorporated into engineered structural soil to support healthy plant growth and improve drainage while allowing access by heavy emergency vehicles to the edges of buildings. ZaaKSand can enhance soil resiliency to climate changes by reducing nutrient loss and improving moisture retention.

These properties make the use of ZaaKSand in the field of gardening extremely advantageous.

It has to be pointed out that the use of the lightweight fine particulates according to the invention is not limited to the herein given examples. Whenever sand may be substituted by the lightweight fine particulates according to the invention, called "ZaaKSand" the use is not limited for example to mixtures of cement to ZaakSand in the ratio of 1 to 3 or 1 to 4 as measured by weight or volume. As demanded by the intended use the ratio of cement to ZaaKSand may also range from 1 to 5 or 1 to 6. Any ratio that is suitable to achieve the prescribed properties falls into the scope of the present invention when using ZaakSand as aggregate for mortar or concrete formulations.

It shall be pointed out that the same applies to the substitution of ZaaKSand or sand by ash or fly ash. As given herein in the examples, ZaaKSand was replaced up to 10 % by weight or volume with fly ash. But it is also in the sense of the present application that the substituted amount may also be less than 5 %, less than 10 %, 15 % or 25 % or 30 % or even more, if demanded by the properties to be reached.

Another great advantage of the lightweight fine particulates according to the invention is that it is possible to produce the lightweight fine particulates easily out of fly ash derived from combustion of coal. The lightweight fine particulates according to the invention are mainly made from a waste material that would have to be disposed otherwise. The production process is very simple and reliable and provides the lightweight fine particulates according to the invention directly.

On the other hand, the lightweight fine particulates according to the invention can also be produced by sieving or sizing techniques as known in the art.

**Examples**

The following examples shall explain the invention in more details without being understood to restrict the scope of the invention to the presented examples.

**Example 1**

Sieve analysis

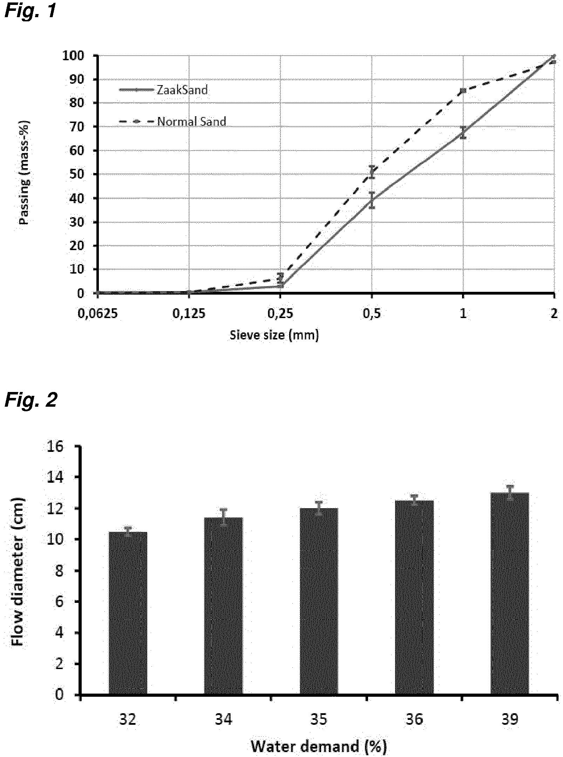

To compare the grading of ZaaKSand with the grading of normal sand, two samples from each type (w = 5000 g) have been dried in the oven and have been tested according to DIN EN 933-1. Table 1 shows the result of sieve analysis, while Figure 1 shows the grading of both normal sand and ZaaKSand. As can be shown from Figure 1, there are some differences between the grading of ZaaKSand and normal sand. ZaaKSand is quite coarser than normal sand.

Table 1: Sieve analysis results of ZaaKSand and normal sand

| Sieve size (mm) | | 0 | 0.063 | 0.125 | 0.25 | 0.5 | 1 | 2 |
|---|---|---|---|---|---|---|---|---|
| ZaaKSand1 | Passing (mass-%) | 0 | 0.245 | 0.405 | 3.1 | 40.05 | 68.41 | 99.985 |
| ZaaKSand 2 | | 0 | 0.39 | 0.45 | 2.64 | 35.54 | 65 | 99.98 |
| Normal sand 1 | | 0 | 0.058 | 0.34 | 4.846 | 48.526 | 84.68 | 97.358 |
| Normal sand 2 | | 0 | 0.098 | 0.42 | 8.266 | 83.412 | 85.472 | 96.82 |

**Example 2**

Loose density, particle density and water absorption of ZaaKSand

To determine the density (loose bulk density) and the water absorption of ZaaKSand, the aggregate sample was dried in the oven at a temperature of 110 $\pm$ 5 °C according to DIN EN 1097-3 until a constant weight and then cooled down to the room temperature. Thereafter, a container with known volume V (cm$^3$) and mass $m_1$ (g) has been filled with the aggregate sample without compaction and the total mass of the filled container has been determined as $m_2$ (g). The loose density ($\rho_l$) has been calculated according to the following formula:

$$\rho_l = \frac{m_2 - m_1}{V}$$

The particle density ($\rho_p$) has been measured according to DIN EN 1097-6 using the pycnometer method. It has been determined by dividing the mass of a certain volume of the dry aggregate by the mass of water occupying the same volume. The following formula is used to calculate the particle density ($\rho_p$) of aggregate:

$$\rho_p = \rho_w * \frac{m_5}{m_5 - (m_3 - m_4)}$$

Where:

$\rho_w$ is the density of water (g/cm$^3$).
$m_3$ is the mass of the pycnometer filled with water and the aggregate sample (g).
$m_4$ is the mass of the pycnometer filled with water (g).
$m_5$ is the mass of the dry sample (g).

The water absorption of ZaaKSand has been measured according to DIN EN 1097-6. The water absorption has been measured at different times: 30 min, 60 min and 24 hours. The following formula has been used to calculate the water absorption:

$$W_A\% = \frac{100 * (m_0 - m_5)}{m_5}$$

Where $m_0$ is the mass of the water-saturated aggregate with dry surface in g. Table 2 shows the results of density and water absorption tests.

Table 2:

| Loose bulk density, particle density and water absorption of ZaaKSand | | | | |
|---|---|---|---|---|
| Particle density g/cm$^3$ | Loose density g/cm$^3$ | Water absorption % | | |
| | | 30 minutes | 60 minutes | 24 hours |
| 2 ± 0.03 | 0.85 ± 0.02 | 14.20 ± 1.3 | 15.50 ± 2 | 17.70 ± 1.8 |

**Example 3**

Performance of ZaaKSand in mortar

To study the behavior of ZaaKSand in cement mortar as fine aggregate, three mortar mixes have been prepared and several tests have been carried out. The first mortar mix has been prepared according to DIN EN 196-1 by using normal sand. The cement to sand ratio was 1 to 3 and the water to cement ratio was 0.5 according to the standard (the water demand is 12.5%). The used cement is CEM I 42.5 R. The second mix has been made by replacing 100 % of normal sand with ZaaKSand (by volume). The third mortar mix has been made by replacing 100 % of normal sand with 90 % ZaaKSand and 10 % fly ash. For the second mix, several trials have been carried out in order to determine the water demand that give an acceptable consistency as can be seen in Figure 2.

Properties of fresh mortar

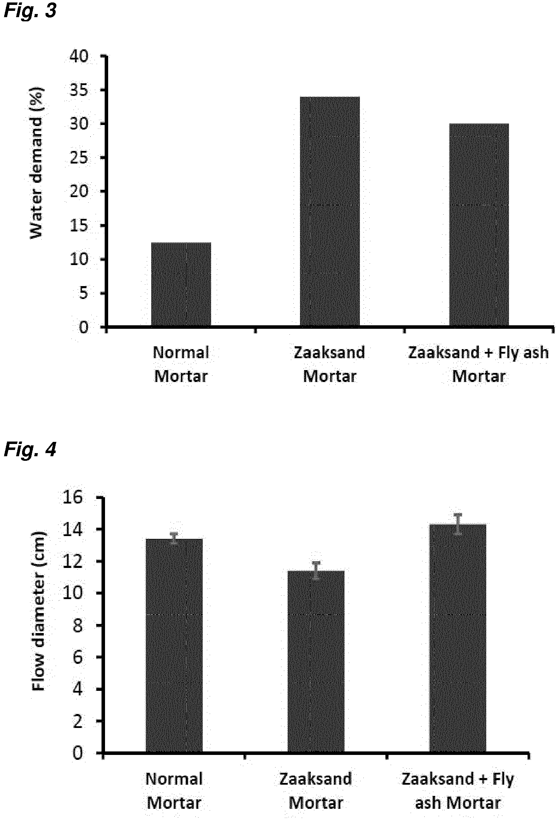

As can be seen from the results of sieve analysis, there are some differences between the grading of ZaaKSand and normal sand. In order to eliminate the effect of this difference on the properties of mortar, ZaaKSand has been sieved, fractionated and remixed in such a way that the grading was the same as that of normal sand.
The mixing procedures of the mortar have been performed according to DIN EN 196-1. The flow diameter and density of fresh mortar have been measured according to DIN EN 1015-3 and 1015-6 respectively. The results of water demand, consistency and density tests of the three mortars are presented in Figures 3, 4 and 5 respectively.

Properties of hardened mortar

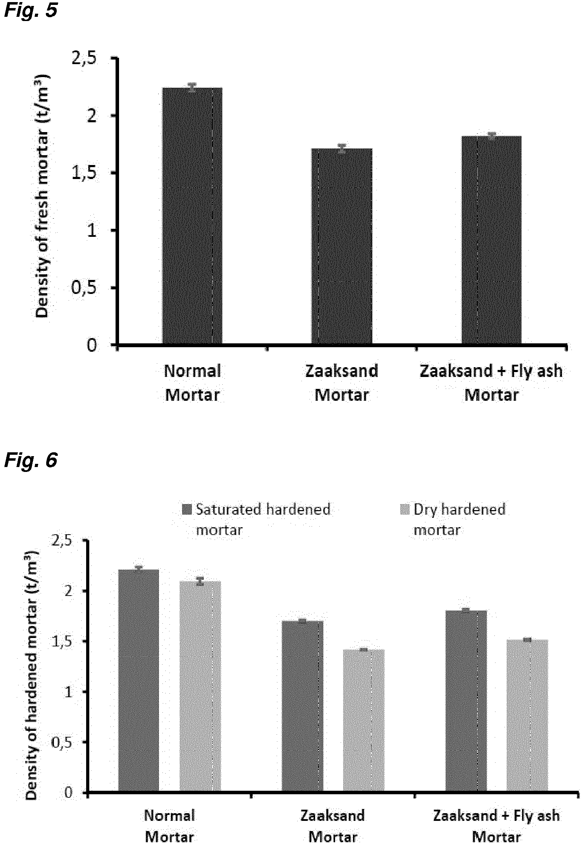

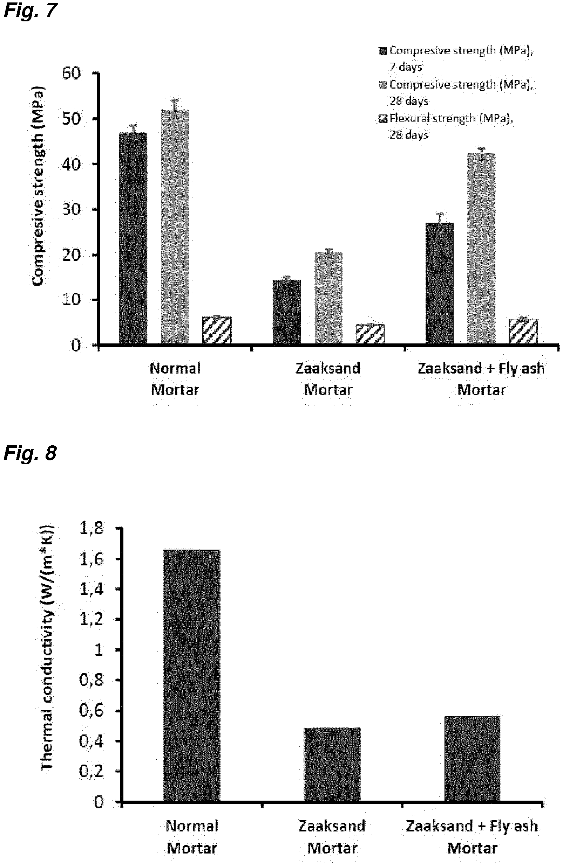

After mixing the mortar, the moulds (40*40*160 mm) have been filled and kept in the standard conditions for 24 hours. Then, the samples were demoulded and cured under water until testing.
After 7 days, the compressive strength has been measured for the three mixes. At the age of 28 days, the density of hardened mortar has been measured according to DIN EN 1015-10 (Figure 6).
In addition, the flexural strength and compressive strength at the age of 28 days have been measured according to DIN EN 1015-11 (Figure 7).
For measuring thermal conductivity, two tiles with dimensions of 200*200*50 mm from each mix have been made.
After 28 days, the plates have been dried until constant weight. After cooling down to the room temperature, the thermal conductivity test has been performed for each mix according to DIN EN 12667 and 12664. The results of the thermal conductivity test are presented in Figure 8.

**Example 4**

Compressive strength category

Two mortar formulations have been prepared and the compressive strength after 28 days according to DIN EN 998-1 has been measured.
The first formulation was prepared according to Example 3 with a cement to ZaakSand ratio of 1 to 3.
The second formulation was also prepared according to Example 3, but the cement to ZaakSand ratio was 1 to 4.
Compressive strength was measured and exceeds 20 N/mm$^2$ for the first formulation (1 to 3 ratio) as given in Figure 7. The second formulation (1 to 4 ratio) provided a compressive strength of > 10 N/mm$^2$.
In respect to the compressive strength of hardened mortar different classes have been defined in DIN EN 998-1.

| Hardened Mortar Classes according to DIN EN 998-1 | |
|---|---|
| Category | compressive strength after 28 days |
| CS I | 0.4 - 2.5 N/mm$^2$ |
| CS II | 1.5 - 5.0 N/mm$^2$ |
| CS III | 3.5 - 7.5 N/mm$^2$ |
| CS IV | $\geq$6 N/mm$^2$ |

Majority of lightweight mortars according to the state of the art fall into CS II and sometimes into CS III. However, ZaaKSand based mortar exceeds 20 N/mm$^2$ for 1 to 3 cement to sand ratio and exceeds 10 N/mm$^2$ for 1 to 4 cement to sand ratio - a significant advantage over existing commercial lightweight mortars. As per the above given categories, the mortar according to the invention falls into category CS IV.

This means that the mortar according to the invention shows a much higher compressive strength than comparable mortars of the state of the art, while even being lighter than those as known in the art.

**Example 5**

Typical plaster formulations

In the following tables different embodiments of mortar formulations according to the invention are described.

**Plaster Formulations**

| Formulation A (Cement: ZaaKSand = 1:3) | |
|---|---|
| **Item** | **Litre** |
| Cement | 1.0 |
| ZaaKSand | 3.0 |
| Fly ash | 0.0 |
| Water | 3.0 |

| Formulation B (Cement: ZaaKSand = 1:3) | |
|---|---|
| **Item** | **Litre** |
| Cement | 1.0 |
| ZaaKSand | 2.7 |
| Fly ash | 0.3 |
| Water | 2.64 |

| Formulation C (Cement: ZaaKSand = 1:4) | |
|---|---|
| **Item** | **Litre** |
| Cement | 1.0 |
| ZaaKSand | 4.0 |
| Fly ash | 0.0 |
| Water | 4.05 |

(continued)

| Formulation D (Cement: ZaaKSand = 1:4) | |
|---|---|
| Item | Litre |
| Cement | 1.0 |
| ZaaKSand | 3.57 |
| Fly ash | 0.43 |
| Water | 3.57 |

Formulations A and B are based on a cement to ZaakSand ratio of 1 to 3, whereas formulations C and D are based on a cement to ZaakSand ratio of 1 to 4.

Furthermore, formulations A and C are free of fly ash, whereas in formulations B and D fly ash is added to replace ZaakSand partly.

The variation of the ratio of cement to ZaakSand, and the partly substitution of ZaakSand with fly ash, allows the adjustment of the properties of the mortar to the respective needs of the construction to be performed.

The examples and embodiments shown above are intended to be merely exemplary and those skilled in the art shall be able to make numerous variations and modifications to it without departing from the spirit of the present invention. All such variations and modifications are intended to be within the scope of the present invention as defined in the appended claims.

## Claims

1. Lightweight fine particulates, especially sintered synthetic sand, **characterized in that** the grading of the particulates is as follows:

| Sieve size (mm) | 2 | 1 | 0.5 | 0.25 |
|---|---|---|---|---|
| Passing (mass-%) | >98 | 55 to 80 | 30 to 45 | 2 to 4 |

2. Lightweight fine particulates, according to claim 1, **characterized in that** the passing mass for the 1 mm sieve size is in the range of 45 to 70 %.

3. Lightweight fine particulates, according to claim 1 or 2, **characterized in that** the passing mass for the 0.5 mm sieve size is in the range of 35 to 40%.

4. Lightweight fine particulates, according to at least one of the claims 1 to 3, **characterized in that** the bulk density is in the range of 600 to 1,200 kg/m$^3$. and/or that the water absorption is in the range of 6 to 15 % by weight.

5. Use of lightweight fine particulates, according to at least one of the claims 1 to 4, as aggregate for construction purposes.

6. Use, according to claim 5, **characterized in that** the lightweight fine particulates are used in combination with fly ash.

7. Use, according to claim 6, **characterized in that** the fly ash is derived from stone coal and/or brown coal.

8. Use of lightweight fine particulates, according to at least one of the claims 1 to 4, as additive in paint or coating formulations, as foundry sand, additive for waste water treatment, substrate for horticultural purposes, for hydroponic gardening, for green roofing purposes or for applications in geotechnics.

9. Building material composition, comprising lightweight fine particulates, according to at one of the claims 1 to 4.

10. Building material composition, according to claim 9, **characterized in that** additionally fly ash is comprised in the composition.

11. Building material composition, according to claim 9 or 10, **characterized in that** the building material is a concrete composition.

12. Building material composition, according to claim 11, **characterized in that** the density of the hardened concrete is less than 2,100 kg/m$^3$ and/or the thermal conductivity of the hardened concrete is less than 0.9 W/(m●K).

13. Building material composition, according to claim 9 or 10, **characterized in that** the building material is a mortar composition.

14. Building material composition, according to claim 13, **characterized in that** the density of the hardened mortar is less than 1,800 kg/m$^3$ and/or the thermal conductivity of the hardened mortar is less than 0.7 W/(m●K).

15. Building material composition, according to claim 13 or 14, **characterized in that** ratio of compressive strength to the flexural strength of the hardened mortar is between 4 : 1 to 7 : 1.

*Fig. 1*

*Fig. 2*

*Fig. 3*

*Fig. 4*

*Fig. 5*

*Fig. 6*

**Fig. 7**

Legend:
- Compresive strength (MPa), 7 days
- Compresive strength (MPa), 28 days
- Flexural strength (MPa), 28 days

Y-axis: Compresive strength (MPa)

X-axis categories: Normal Mortar, Zaaksand Mortar, Zaaksand + Fly ash Mortar

**Fig. 8**

Y-axis: Thermal conductivity (W/(m*K))

X-axis categories: Normal Mortar, Zaaksand Mortar, Zaaksand + Fly ash Mortar

Europäisches
Patentamt

European
Patent Office

Office européen
des brevets

# EUROPEAN SEARCH REPORT

Application Number

EP 15 17 2193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "An initiative by Dr. Abbas Khan", , 31 December 2012 (2012-12-31), XP055228712, Retrieved from the Internet: URL:http://flyash2012.missionenergy.org/files/Zaak_ Mr Jagdish Shah.pdf [retrieved on 2015-11-16] * the whole document * | 1-15 | INV. C04B14/02 C04B14/04 C04B14/06 C04B20/00 C04B20/02 |
| X | EP 0 985 646 A1 (TUBAG TRASS ZEMENT STEIN [DE]) 15 March 2000 (2000-03-15) * paragraph 0020 & example 4 * | 1-15 | |
| X | JP 2000 026142 A (UBE INDUSTRIES) 25 January 2000 (2000-01-25) * abstract and table 2 * | 1-15 | |
| X | Dale P Bentz ET AL: "Concrete international / OctOber 2006 39", , 1 October 2006 (2006-10-01), XP55229386, Retrieved from the Internet: URL:http://ciks.cbt.nist.gov/~bentz/lwatomoic.pdf [retrieved on 2015-11-18] * table 2 * | 1-15 | TECHNICAL FIELDS SEARCHED (IPC) C04B |

-/--

The present search report has been drawn up for all claims

| Place of search | Date of completion of the search | Examiner |
|---|---|---|
| Munich | 23 November 2015 | Munro, Brian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 15 17 2193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YASAR E ET AL: "Strength properties of lightweight concrete made with basaltic pumice and fly ash", MATERIALS LETTERS, NORTH HOLLAND PUBLISHING COMPANY. AMSTERDAM, NL, vol. 57, no. 15, 1 April 2003 (2003-04-01), pages 2267-2270, XP004852231, ISSN: 0167-577X, DOI: 10.1016/S0167-577X(03)00146-0 * "2. Materials" - in particular, "2.3 Aggregate and its Gravity"; tables 2 and 3; figures 1 & 2 * | 1-15 | |
| X<br>A | US 2003/047114 A1 (KAYALI OBADA [AU] ET AL) 13 March 2003 (2003-03-13) * the whole document * | 9,11<br>1-8,10, 12-15 | |
| X<br><br><br><br><br><br><br><br>A | R. WASSERMAN ET AL: "Interfacial interactions in lightweight aggregate concretes and their influence on the concrete strength", CEMENT AND CONCRETE COMPOSITES, vol. 18, no. 1, 1 January 1996 (1996-01-01), pages 67-76, XP055228702, GB ISSN: 0958-9465, DOI: 10.1016/0958-9465(96)00002-9 * the whole document * | 9,11<br><br><br><br><br><br><br><br>1-8,10, 12-15 | |

TECHNICAL FIELDS
SEARCHED    (IPC)

The present search report has been drawn up for all claims

| Place of search | Date of completion of the search | Examiner |
|---|---|---|
| Munich | 23 November 2015 | Munro, Brian |

EPO FORM 1503 03.82 (P04C01)

## ANNEX TO THE EUROPEAN SEARCH REPORT
## ON EUROPEAN PATENT APPLICATION NO.

EP 15 17 2193

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2015

| Patent document cited in search report | | Publication date | Patent family member(s) | | Publication date |
|---|---|---|---|---|---|
| EP 0985646 | A1 | 15-03-2000 | AT | 238247 T | 15-05-2003 |
| | | | EP | 0985646 A1 | 15-03-2000 |
| | | | PL | 335325 A1 | 13-03-2000 |
| JP 2000026142 | A | 25-01-2000 | NONE | | |
| US 2003047114 | A1 | 13-03-2003 | AT | 490949 T | 15-12-2010 |
| | | | AU | 2008200246 A1 | 07-02-2008 |
| | | | CA | 2447539 A1 | 21-11-2002 |
| | | | CA | 2768083 A1 | 21-11-2002 |
| | | | CN | 1509259 A | 30-06-2004 |
| | | | EP | 1392614 A1 | 03-03-2004 |
| | | | ES | 2355206 T3 | 23-03-2011 |
| | | | US | 2003047114 A1 | 13-03-2003 |
| | | | WO | 02092530 A1 | 21-11-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 3099MUM2011